# EUROPÄISCHE PATENTSCHRIFT

(11) **EP 1 939 427 B1**
(45) Veröffentlichungstag und Bekanntmachung des Hinweises auf die Patenterteilung: **01.02.2012**
(21) Anmeldenummer: 07123843.0
(22) Anmeldetag: 20.12.2007
(51) Int. Cl.: F02C 6/12, F01D 17/14, F02B 37/00

(54) **Abgasturbolader**
Exhaust turbocharger
Turbocompresseur d'échappement

(30) Priorität: 20.12.2006 DE 102006060907
(43) Veröffentlichungstag der Anmeldung: 02.07.2008
(73) Patentinhaber: MP-Engineering GmbH, 42899 Remscheid (DE)
(72) Erfinder: Willeke, Ute, 45549, Sprockhövel (DE)
(74) Vertreter: Lippert, Stachow & Partner

(56) Entgegenhaltungen:
- EP-A- 0 086 466
- WO-A-03/044327
- WO-A-2006/053653
- DE-A1- 10 222 919
- FR-A- 2 404 736
- GB-A- 2 134 602
- JP-A- 56 044 421
- US-A- 4 502 282
- US-A- 5 146 754

## Beschreibung

Die Erfindung betrifft einen Turbolader mit einer Turbine, die einen Turbinenrotor aufweist, welcher über eine Welle einen Rotor eines Verdichters antreibt, wobei die Turbine ein Turbinengehäuse mit einer Abgaseinlassöffnung, einem Abgasdurchlassbereich und einer Abgasauslassöffnung umfasst und wobei ein Steuermittel vorgesehen ist zum Steuern des zum Turbinenrotor hinströmenden Abgases.

Um insbesondere schon bei niedriger Motordrehzahl einen genügend Abgasdruck aufbauenden Turbolader mit entsprechend hohem Ladedruck bereitzustellen, sind Turbolader bekannt, welche das Prinzip einer variablen Turbinengeometrie (VTG) nutzen. Ein derartiger VTG-Lader kann beispielsweise einen Leitschaufelverstellmechanimus zum Verstellen der Neigung der um das Turbinenrad angeordneten Leitschaufeln umfassen, wie es beispielsweise in der deutschen Patentanmeldung DE 103 13 167 A1 beschrieben ist. Für die Realisierung eines solchen Abgasturboladers sind eine Vielzahl von Einzelteilen notwendig, welche den Herstellungsaufwand für den VTG-Lader erhöhen, darüber hinaus ist ein derartiger Verstellmechanismus nur begrenzt hitzebeständig herstellbar, sodass eine solche Leitschaufelverstelleinrichtung in der Regel nur bis zu einer Abgastemperatur von etwa 950° eingesetzt werden kann.

Eine weitere Variante eines VTG-Laders ist in der deutschen Patentanmeldung DE 199 24 228 A1 beschrieben. Bei dieser Ausführungsform ist das Turbinengehäuse mehrflutig mit zwei axial beabstandeten Schnecken ausgebildet, deren Austrittsöffnungen abschnittsweise den Radeintritt des Turbinenrades umgeben und aufgrund der Anordnung der Schnecken axial zueinander beabstandet sind. Im Bereich der Austrittsöffnungen ist ein axial verschieblicher Schieber zum Öffnen und Schließen der Austrittsöffnungen der beiden Schnecken vorgesehen. Auch ein solcher Abgasturbolader ist herstellungsseitig aufwendig und damit kostenintensiv.

Eine weitere Variante eines Abgasturboladers mit variabler Turbinengeometrie ist in der deutschen Patentanmeldung DE 197 17 559 A1 beschrieben. Bei dieser Variante ist der Spiralbereich der Turbine in einen Innenspiralbereich und einen radial außen liegenden Außenspiralbereich getrennt, wobei eine Vielzahl von Verbindungsöffnungen in der Trennwand vorgesehen sind, um zwischen dem Innenspiralbereich und dem Außenspiralbereich eine Verbindung bereitzustellen. Zum Steuern der Abgase ist im Abgaseingangsbereich eine Klappe vorgesehen, welche über einen Bolzen mit einem Gelenkteil verbunden ist. Der Betätigungsmechanismus für die beschriebene Klappe ist vergleichsweise aufwendig und kostenintensiv.

Die Offenlegungsschrift EP-A-0 086 466 betrifft einen Abgasturbolader mit einer Turbine, die einen Turbinenrotor aufweist, welcher über eine Welle einen Rotor eines Verdichters antreibt, und die Turbine ein Turbinengehäuse mit einer Abgaseinlassöffnung, einem Abgasdurchlassbereich und einer Abgasauslassöffnung umfasst, wobei ein Steuermittel vorgesehen ist zum Steuern des zu dem Turbinenrotor hinströmenden Abgases, wobei das Steuermittel einen im Turbinengehäuse gelagerten Walzendrehschieber umfasst, welcher bezogen auf seine Längsachse eine Queröffnung aufweist, die zur Längsachse außermittig angeordnet ist, wobei der Mantel des Walzendrehschiebers über einen Umfangsabschnitt durchbrochen ist.

Der Erfindung liegt die Aufgabe zugrunde, einen Abgasturbolader mit variabler Turbinengeometrie bereitzustellen, bei welchem die Nachteile von herkömmlichen Abgasturboladern mit variabler Turbinengeometrie zumindest teilweise behoben sind.

Diese Aufgabe löst die Erfindung auf überraschend einfache Weise schon mit einem Abgasturbolader mit den Merkmalen von Anspruch 1. Bei dem erfindungsgemäße Turbolader umfasst das Steuermittel zum Steuern des zu dem Turbinenrotor hin strömenden Abgases einen im Turbinengehäuse gelagerten Walzendrehschieber, welcher bezogen auf seine Längsachse eine Queröffnung aufweist, die zur Längsachse außermittig angeordnet ist, wobei der Mantel des Walzendrehschiebers über einen Umfangsabschnitt durchbrochen ist. Durch die Verwendung eines Walzendrehschiebers als Steuermittel zum Steuern des Abgases in der Turbine erniedrigt sich der Herstellungsaufwand, darüber hinaus können mit einem Walzendrehschieber Abgase gesteuert werden, die eine extrem hohe Temperatur aufweisen, sodass sich der Abgasturbolader flexibler als andere Lader einsetzen lässt. Bei dem Lader kann das Steuermittel drehmomentfrei angeordnet sein, was die Anforderungen an das Verstellglied stark vermindert. Ein solcher Walzendrehschieber ist herstellungsseitig insbesondere im Wachsausschmelzverfahren herstellbar, sodass das Teil nach dessen Herstellung nicht nachbearbeitet werden muss.

Die Achse des Walzendrehschiebers ist zur Queröffnung deaxiert. Dadurch, dass der Mantel des Walzendrehschiebers durch die Gestaltung der Queröffnung über einen Umfangsabschnitt durchbrochen ist, wird etwa radial gegenüber diesem Umfangsabschnitt eine Strömungskante bereitgestellt, mit welcher der Abgasdurchlassbereich, insbesondere dessen wirksamer Kanalquerschnitt und damit die Strömungsgeschwindigkeit des Abgases gesteuert werden kann. Darüber hinaus kann der Walzendrehschieber zum Öffnen und Schließen von Strömungskanälen innerhalb des Turbinengehäuses eingesetzt werden.

Der erfindungsgemäße Abgasturbolader stellt eine Bypassfunktion bereit, bei welcher das Abgas so umgeleitet wird, dass es nicht mehr auf den Turbinenrotor trifft, sondern in eine Bypassöffnung abgeleitet wird. Eine solche Funktion verbessert das Startverhaltens eines Turbomotors, da auf diese Weise der Übergang von Wärme aus dem Abgas in die Turbine weitgehendst vermieden werden kann, sodass das Abgas in einer Startphase des Motors zuerst den Katalysator auf Betriebstemperatur bringen kann. Hierzu ist der erfindungsgemäße Abgasturbolader mit einem Turbinengehäuse ausgestattet, welches eine Bypassöffnung aufweist, die vom Walzendrehschieber bei vorgegebener Walzendrehschieberstellung freigegeben wird, sodass der Walzendrehschieber den Abgasdurchlassbereich stromabwärtig zum Turbinenrotor blockiert. Somit kann der Walzendrehschieber einerseits zur Einstellung der Strömungsgeschwindigkeit des Abgases eingestellt und ferner mittels einer Schaltfunktion in eine Stellung gebracht werden, bei welcher die Abgase abgeleitet werden, dass diese nicht mehr durch die eigentliche Abgasauslassöffnung der Turbine entweichen. Hierzu kann vorgesehen sein, dass die Bypassöffnung in dem Abschnitt des Abgasdurchlassbereichs ansetzt, in welchem der Drehschieber radial aus dem Strömungskanal herausragt.

Der Abgasdurchlassbereich des erfindungsgemäßen Abgasturboladers ist mehrflutig ausgebildet mit wenigstens zwei Zuströmkanälen im Turbinengehäuse, welche jeweils eine Schneckenform aufweisen und die rotoraxial zueinander beabstandet und durch zumindest eine Wand getrennt sind. Da die Längsachse des Walzendrehschiebers senkrecht zur Achse des Rotors verläuft, kann der Drehschieber je nach Drehstellung zum Öffnen bzw. Schließen der vorhandenen Zuströmkanäle dienen. Die Zuströmkänale sind wie schon beschrieben jeweils als Abgasschnecken ausgebildet, welche ein unterschiedliches Volumen haben können und das Abgas auf ein gemeinsames Turbinenrad führen.

In einer zweckmäßigen Ausführungsform kann vorgesehen sein, dass der Walzendrehschieber in einem als Kanal ausgebildeten Abschnitt des Abgasdurchlassbereichs derart angeordnet ist, dass in einer vorgegebenen Betriebsstellung des Schiebers der Kanal vollständig freigegeben ist und insofern die Abgasströmung unbeeinflusst lässt. Dabei ist der Verlauf der Queröffnung im Walzendrehschieber in Strömungsrichtung derartig ausgebildet, dass eine Veränderung des Kanals über die Erstreckung des Schiebers in Strömungsrichtung an den die Queröffnung des Schiebers festlegenden Innenflächen nachgebildet ist.

Es kann zweckmäßig sein, wenn der Walzendrehschieber in der Freigabebetriebsstellung in einem Umfangsabschnitt radial aus dem Kanal heraus in eine Tasche des Turbinengehäuses hineinragt, wobei dieser Umfangsabschnitt dem offenen Umfangsabschnitt des Walzendrehschiebers etwa radial gegenüberliegt. Bei dieser Ausführungsform kann eine Steuerkante zum Verengen bzw. Verschließen des Abgasdurchlassbereichs durch die in Strömungsrichtung liegende hintere Begrenzungskante des Schiebers bereitgestellt werden, welche den umfänglich offenen Abschnitt des Walzendrehschiebers etwa radial gegenüberliegt.

Zweckmäßigerweise kann vorgesehen sein, dass in der Freigabe-Betriebsstellung des Walzendrehschiebers der Kanalverlauf im Bereich des offenen Umfangsabschnitts des Schiebers eben ist und insbesondere an dem ebenen Kanalabschnitt im Wesentlichen senkrecht verlaufende Kanalwände angrenzen. Durch diese konstruktive Maßnahme wird erreicht, dass im Bereich der ebenen Kanalwandung keine Abschnitte des Drehschiebers liegen, welche bei einer Betätigung des Schiebers aus der Freigabe-Betriebsstellung in die Abgasströmung hineingedreht werden müssen. Darüber hinaus sind dann bei der Betätigung des Walzendrehschiebers aus der Freigabe-Betriebsstellung heraus in dem geraden Kanalabschnitt keine taschenförmigen Ausnehmungen notwenig, welche die Abgasströmung am Rande des geraden Kanalabschnitts beeinflussen könnten.

Um zu vermeiden, dass sich der im Turbinengehäuse befestigte Drehschieber durch die in Betrieb auftretenden Kräfte bzw. Temperaturen verklemmt, kann vorgesehen sein, dass der Walzendrehschieber in seiner Mantelfläche taschenförmige Vertiefungen aufweist. Dabei kann der Bereich der taschenförmigen Vertiefungen durch den Umfangsabschnitt festgelegt sein, welcher in der Freigabe-Betriebsstellung des Walzendrehschiebers aus dem Kanal heraus in das Turbinengehäuse hineinragt.

Um die Formstabilität des Walzendrehschiebers im Betrieb zu erhöhen, kann es zweckmäßig sein, wenn diese an seiner Mantelfläche Versteifungsrippen aufweist, welche beispielsweise parallel und/oder senkrecht zur Längsachse des Walzendrehschiebers verlaufen.

Zur Lagerung des Walzendrehschiebers im Turbinengehäuse kann ersterer an beiden Längsenden jeweils einen Lagerzapfen aufweisen, wobei zumindest ein Lagerzapfen in einem Lagerdeckel gehalten ist, der in einer Öffnung des Turbinengehäuses sitzt und mit diesem verbunden, insbesondere verschweißt ist. Dieser Lagerdeckel kann beispielsweise als Sinterteil ausgebildet sein. Wird die Lagerung des Walzendrehschiebers im Lagerdeckel durch ein Gleitlager bereitgestellt, kann es ferner zweckmäßig sein, wenn die Lagerbüchse am Lagerdeckel mittels eines zweiten Sinterprozesses gestaltet ist. In diesem Fall könnte die Außenkontur des Lagerdeckels in einem ersten Sintervorgang mit einem ersten Sinterprozess gestaltet sein, während die danach eingesinterte Lagerbuchse aus einem zweiten Metall hergestellt wird, wobei das Material der Lagerbüchse zweckmäßigerweise ein eingesintertes Schmiermittel aufweisen kann.

Um eine Abdichtung des Drehschiebers zur Turbinengehäusewand bzw. zum Lagerdeckel bereitzustellen, kann zweckmäßigerweise vorgesehen sein, dass der Lagerzapfen eine Nut zur Aufnahme eines Kolbenrings aufweist, wobei dieser Kolbenring in zusammengebauten Zustand dann mit der Lagerbüchse abdichtend zusammenwirkt.

Um zumindest eine der Abdichtstellen zu vermeiden, kann es zweckmäßig sein, wenn das Turbinengehäuse auf der Innenseite der Außenwandung ein Sackloch zur Aufnahme eines Lagerzapfens des Walzendrehschiebers aufweist. Eine derartige konstruktive Gestaltung der Lagerung des Walzendrehschiebers ermöglicht weiterhin einen einfachen Einbau des Walzendrehschiebers in das Turbinengehäuse durch das Einschieben des Schiebers in Richtung zur Längsachse desselben in eine vorbereitete Öffnung des Turbinengehäuses.

Um die Einstellung des Walzendrehschiebers zu ermöglichen, kann ein Lagerzapfen des Schiebers aus dem Turbinengehäuse heraus geführt sein, wobei dieser vorstehende Abschnitt des Zapfens in Wirkverbindung mit einer Verstelleinrichtung zur Drehung des Walzendrehschiebers um dessen Längsachse steht. Da der Walzendrehschieber so ausgebildet sein kann, dass dieser in der Abgasströmung unabhängig von seiner Betriebsstellung drehmomentfrei ist, kann die Verstelleinrichtung vergleichsweise klein gehalten werden, da für eine Verstellung des Walzendrehschiebers dann keine hohen Kräfte aufgewendet werden müssen. Beispielsweise kann ein kleiner Schrittmotor, ein Hydraulikmotor oder auch eine Druckdose eingesetzt werden. Um zu vermeiden, dass die Verstelleinrichtung durch die Nähe zum Turbinengehäuse zu großen Temperaturen ausgesetzt ist, kann vorgesehen sein, dass an den Lagerzapfen ein Druck-Zug-Zug angreift, welcher die von einem zum Abgasturbolader entfernt platzierten Verstelleinrichtung erzeugte Kraft auf den Walzendrehschieber überträgt. Dieser sowohl Druck- als auch Zugkräfte übertragende Zug kann aus extrem hitzebeständigem Material hergestellt sein.

Die relative Anordnung des Walzendrehschiebers innerhalb des Turbinengehäuses kann an jedwede Gestaltung des Turbinengehäuses angepasst sein.

Der erfindungsgemäße Abgasturbolader eignet sich auch besonders gut zur Bereitstellung einer Bypassfunktion, bei welcher das Abgas so umgeleitet wird, dass es nicht mehr auf den Turbinenrotor trifft, sondern in eine Bypassöffnung abgeleitet wird. Eine solche Funktion ist insbesondere zur Verbesserung des Startverhaltens eines Turbomotors vorteilhaft, da auf diese Weise der Übergang von Wärme aus dem Abgas in die Turbine weitgehendst vermieden werden kann, sodass das Abgas in einer Startphase des Motors zuerst den Katalysator auf Betriebstemperatur bringen kann. Hierzu kann der erfindungsgemäße Abgasturbolader mit einem Turbinengehäuse ausgestattet sein, welches eine Bypassöffnung aufweist, die vom Walzendrehschieber bei vorgegebener Walzendrehschieberstellung freigegeben wird, sodass der Walzendrehschieber den Abgasdurchlassbereich stromabwärtig zum Turbinenrotor blockiert. In dieser vorteilhaften Ausführungsform kann der Walzendrehschieber einerseits zur Einstellung der Strömungsgeschwindigkeit des Abgases eingestellt und ferner mittels einer Schaltfunktion in eine Stellung gebracht werden, bei welcher die Abgase abgeleitet werden, dass diese nicht mehr durch die eigentliche Abgasauslassöffnung der Turbine entweichen. Hierzu kann vorgesehen sein, dass die Bypassöffnung in dem Abschnitt des Abgasdurchlassbereichs ansetzt, in welchem der Drehschieber radial aus dem Strömungskanal herausragt.

Grundsätzlich kann bei dem erfindungsgemäßen Abgasturbolader der Walzendrehschieber als Steuermittel zum Steuern des Abgasstromes innerhalb des Turbinengehäuses in jedem Abschnitt des Abgasdurchlassbereichs angeordnet sein. Zweckmäßigerweise kann der Walzendrehschieber dort angeordnet sein, wo der Abgasdurchlassbereich einen einzelnen Strömungskanal aufweist. Besonders zweckmäßig kann es sein, wenn sich im Bereich seines Drehkreises, insbesondere stromabwärts, Kanalverzweigungen befinden, sodass mittels der Drehschieberstellung die Abgasströmung in eine oder mehrere der Kanalverzweigungen gerichtet werden kann.

In einer vorteilhaften Ausführungsform kann vorgesehen sein, dass der Abgasdurchlassbereich eine herkömmliche Schneckenform aufweist, welche wenigstens durch eine Zwischenwand unterteilt ist, wodurch zumindest abschnittsweise getrennte Schneckenkanäle gestaltet sind, wobei sich die wenigstens eine Zwischenwand über einen vorgegebenen Umfangsabschnitt der Schnecke radial beabstandet und parallel zur Innenfläche der Turbinenaußenwand erstreckt. Eine solche Zwischenwand kann die Funktion einer Leitrippe ausüben, damit im Falle einer durch den Schieber gestaltete Strömung mit erhöhter Strömungsgeschwindigkeit letztere stromabwärts hinter dem Schieber beibehalten werden kann, sodass die Strömung letztlich mit einer erhöhten Geschwindigkeit auf das Turbinenrad auftritt.

Dabei kann der Walzendrehschieber im Kanal so angeordnet sein, dass dieser den Kanal, ausgehend von einer Verschlussstellung zuerst in einem Bereich öffnet, welcher radial außen im Turbinengehäuse liegt. Insofern wird nach der Öffnung des Kanals die Strömung entlang der Innenfläche der Turbinenaußenwand geführt, wobei die Zwischenwand diese Strömung radial innen über deren Umfangserstreckung führt. Durch die Gestaltung von einer oder mehreren derartiger, radial beabstandeten Zwischenwänden können mehrere innere und äußere Schneckenkanäle erzeugt werden, deren Querschnitte sich in Strömungsrichtung verringern. Je nach Anwendung kann eine oder mehrere derartige, als Leitrippen für die Abgasströmung dienende Zwischenwände gestaltet sein, welche integral mit dem Turbinengehäuse hergestellt sein können. Um die Aufrechterhaltung der durch den Walzendrehschieber erzeugten Abgasströme auch stromabwärts innerhalb der Schnecke in Abhängigkeit vom radialen Abstand zum Turbinenrotor beizubehalten, kann erfindungsgemäß vorgesehen sein, dass sich eine radial außen liegende Zwischenwand umfänglich in Stromrichtung weiter erstreckt, als eine radial innen liegende Zwischenwand.

Im Hinblick auf die erzeugte Abgasströmung kann es vorteilhaft sein, wenn eine Dichtfläche an einer Steuerkante des Walzendrehschiebers in einer vorgegebenen Betriebsstellung des Schiebers mit einer Stirnfläche einer im Abgasdurchlassbereich angeordneten Zwischenwand zum Verschließen eines Schneckengangs zusammenwirkt. Durch diese konstruktive Maßnahme kann erreicht werden, dass bei dem radial außen liegenden, geöffneten Schneckengang ein kontinuierlicher, im Idealfall laminarer Strömungsübergang erfolgt.

Neben den Gestaltungen, bei welchen mehrere im Turbinengehäuse radial beabstandete Zwischenwände vorgesehen sind, kann es auch zweckmäßig sein, einen mehrflutigen Abgasdurchlassbereich vorzusehen, der in Schneckenform wenigstens zwei Zuströmkanäle umfasst, welche axial zueinander beabstandet und durch zumindest eine Wand getrennt sind, welche je nach Gestaltung des Turbinengehäuses beispielsweise etwa senkrecht zur Turbinenachse verlaufen kann. Bei dieser erfindungsgemäßen Ausführungsform dient der Walzendrehschieber zum Öffnen bzw. Schließen der vorhandenen Zuströmkanäle. Auch hier wird durch das Ändern des Volumens der Turbine deren Geometrie geändert.

Dabei kann es zweckmäßig sein, wenn die Austrittsöffnungen der Zuströmkanäle den Radeintritt des Turbinenrades umgeben, und axial zueinander beabstandet sind. Das Abgas tritt an den Austrittsöffnungen der geöffneten Zuströmkanäle auf, da sich die Schneckenkanäle in dieser Ausführungsform bis zum Radeintritt des Turbinenrades erstrecken. Um in vorgegebener Weise einen der axial beanstandeten Schneckenkanäle zu verschließen, kann erfindungsgemäß vorgesehen sein, dass eine Dichtfläche an einer Steuerkante des Walzendrehschiebers in einer vorgegebenen Betriebsstellung des Schiebers mit einer Stirnfläche einer Zwischenwand zum Verschließen eines Zuströmkanals zusammenwirkt. Es kann zweckmäßig sein, wenn eine solche Steuerkante des Walzendrehschiebers parallel zur Walzendrehschieberachse verläuft. Dies ist jedoch nicht in jedem Fall notwendig, in bestimmten Ausführungsformen kann es bei der Gestaltung der Schneckenkanäle auch zweckmäßig sein, wenn diese Steuerkante des Walzendrehschiebers schräg zu dessen Achse verläuft. Eine solche Gestaltung ist beispielsweise zweckmäßig, wenn der Walzendrehschieber Kanäle von axial beabstandeten Schnecken öffnen bzw. schließen soll.

Bei dem erfindungsgemäßen Abgasturboladerkann es zweckmäßig sein, wenn der Walzendrehschieber mit fortschreitender Drehung in eine vorgegebene Drehrichtung sukzessiv, d.h. aufeinanderfolgend die Funktionen a) Öffnen eines Bypasskanals und Verschließen aller Zuströmkanäle; b) Öffnen eines ersten Zuströmkanals unter Schließen des Bypasskanals und aller weiteren Zuströmkanäle; c) Öffnen zumindest zweier Zuströmkanäle und Verschließen des Bypasskanals und d) Öffnen von zumindest zwei Zuströmkanälen und Teilöffnen des Bypasskanals aufweist. Es sei darauf hingewiesen, dass die beschriebenen Drehstellungen nacheinander über eine kontinuierliche Verdrehung des Walzendrehschiebers einstellbar sind und insofern auch Zwischenstellungen möglich sind. Insbesondere kann die Gestaltung auch derartig sein, dass beim Weiterdrehen des Walzendrehschiebers in die vorgegebene Drehrichtung sowohl der Bypasskanal als auch alle Zuströmkanäle vollständig geöffnet sind. Eine derartige Drehstellung als auch die Drehstellung d) entspricht dabei einer Waste-Gate-Funktionsstellung, die es ermöglicht, den auf die Turbine auftreffenden Abgasstrom zu erniedrigen, wenn der Ladedruck zu stark ansteigt. Eine solche Funktion wird bei herkömmlichen Turboladern beispielsweise durch eine zusätzlich vorgesehene Klappe im Bereich der Außenwandung im Abgaszustrom vorgesehen, welche ein Ablassen von überschüssigen Abgasen ermöglicht, um beispielsweise die Beschädigung von Lader- und/oder Motorteilen aufgrund eines zu hohen Ladedrucks zu vermeiden. Bei dem erfindungsgemäßen Abgasturbolader ist demnach eine solche zusätzliche Waste-Gate-Klappe nicht notwendig, da auch diese Funktionalität über den Walzendrehschieber bereitgestellt werden kann.

Um zu vermeiden, dass bei einer Drehstellung des Walzendrehschiebers, bei welcher ein erster Zustromkanal (d.h. die erste Abgasschnecke) geöffnet und der Bypasskanal sowie alle weiteren Zuströmkanäle (d.h. alle weiteren Abgasschnecken) geschlossen sind, Abgas, das über den ersten Zustromkanal in die Turbine einströmt und dann über einen der weiteren Kanäle in den Bypasskanal abfließt, kann der Walzendrehschieber ein entsprechendes Mittel aufweisen. Dies kann beispielsweise durch eine Mantelflächengestaltung des Walzendrehschiebers, insbesondere in Form einer Nase ausgeführt sein, welche insofern umfänglich an dem Walzendrehschieber angeordnet ist.

Beispielesweise kann ein erfindungsgemäßer Turbolader mit einem Turbinengehäuse ausgestattet sein, dass zwei axial beabstandete Abgasschnecken mit unterschiedlichem Volumen aufweist, welche das Abgas auf ein gemeinsames Turbinenrad führen. Die Mantelflächengestaltung des Walzendrehschiebers kann dann derart sein, das bei der Drehschieberstellung b) ein Mantelflächenabschnitt des Drehschiebers gerade den Eingang der zweiten Abgasschnecke verschließt, sodass aus der zweiten Abgasschecke kein Abgas in den Bypasskanal abströmen kann.

Die Erfindung wird im Folgenden durch das Beschreiben einiger Ausführungsformen unter Bezugnahme auf die beiliegenden Zeichnungen erläutert, wobei
- Fig. 1: das Turbinengehäuse eines Abgasturboladers in einer ISO-Schnittdarstellung,
- Fig. 2: das in Fig. 1 dargestellte Turbinengehäuse in einer Schnittdarstellung, bei welcher sich der Walzendreh- schieber in einer Freigabe-Betriebsstellung befin- det,
- Fig. 3: das in Fig. 1 dargestellte Turbinengehäuse in einer Schnittdarstellung, bei welcher sich der Walzendreh- schieber in einer zweiten Betriebsstellung befindet,
- Fig. 4: das in Fig. 1 gezeigte Turbinengehäuse in einer Schnittdarstellung, bei welcher sich der Walzendreh- schieber in einer Bypass-Betriebsstellung befindet,
- Fig. 5: in einer Schnittdarstellung das Turbinengehäuse eines weiteren Turbolader, wobei sich der Walzen- drehschieber in einer Freigabe-Betriebsstellung be- findet,
- Fig. 6: das in Fig. 5 dargestellte Turbinengehäuse, wobei sich der Walzendrehschieber in einer Betriebsstel- lung befindet, in der ein Schneckenkanal abgedeckt ist,
- Fig. 7: das in Fig. 5 dargestellte Turbinengehäuse, wobei sich der Walzendrehschieber in einer Bypass- Betriebsstellung befindet,
- Fig. 8a: einen Walzendrehschieber zur Verwendung in einem Abgasturbolader in drei ISO-Ansichten,
- Fig. 8b: den in Fig. 8a dargestellten Walzendrehschieber in einer Schnittdarstellung im eingebauten Zustand,
- Fig. 9: ein Turbinengehäuse einer Ausführungsform eines er- findungsgemäßen Abgasturboladers in einer Schnitt- darstellung,
- Fig. 10: das in Fig. 9 gezeigte Turbinengehäuse entlang des Schnittes C-C mit einer Freigabe-Betriebsstellung des Walzendrehschiebers,
- Fig. 11: das in Fig. 9 dargestellte Turbinengehäuse entlang des Schnittes C-C bzw. B-B,
- Fig. 12: das in Fig. 9 dargestellte Turbinengehäuse entlang des Schnittes A-A, wobei der Walzendrehschieber ei- nen ersten Schneckenkanal sperrt,
- Fig. 13: das in Fig. 12 dargestellte Turbinengehäuse entlang des Schnittes B-B bzw. C-C,
- Fig. 14: das in Fig. 9 dargestellte Turbinengehäuse in einer Schnittdarstellung mit in einem Bypass-Betriebsstel- lung befindlichen Walzendrehschieber,
- Fig. 15: in einer Schnittdarstellung ein Turbinengehäuse ei- ner weiteren Ausführungsform eines erfindungsgemäß ausgebildeten Abgasturboladers,
- Fig. 16: das in Fig. 15 dargestellte Turbinengehäuse entlang des Schnittes A-A mit einer Betriebsstellung des Walzendrehschiebers, in welcher dieser einen ersten Schneckenkanal abdeckt,
- Fig. 17: das in Fig. 16 dargestellte Turbinengehäuse entlang des Schnittes B-B bzw. C-C,
- Fig. 18: einen Abgasturbolader in einer Schnittdarstellung,
- Fig. 19: ein Turbinengehäuse einer weiteren Ausführungsform eines erfindungsgemäßen Abgasturboladers in einer aufgeschnittenen Darstellung mit vorgegebener Dreh- stellung des Drehwalzenschiebers,
- Fig. 20: das in Fig. 19 gezeigte Turbinengehäuse mit einer anderen Drehstellung des Walzendrehschiebers und
- Fig. 21: den in den Ausführungsformen der Figuren 19 und 20 verwendeten Walzendrehschieber in verschiedenen Ab- sichten
zeigt.

Ein Abgasturbolader 1 umfasst als elementare Bauteile eine Turbine 10, die einen Turbinenrotor 52 aufnimmt, welcher über eine Welle 2 einen Rotor 5 eines Verdichters 4 antreibt. Der Verdichter erhöht den Druck im Ansaugtrakt des Motors, sodass während des Ansaugtaktes eine größere Luftmenge in die Zylinder gelangt als bei einem Saugmotor.

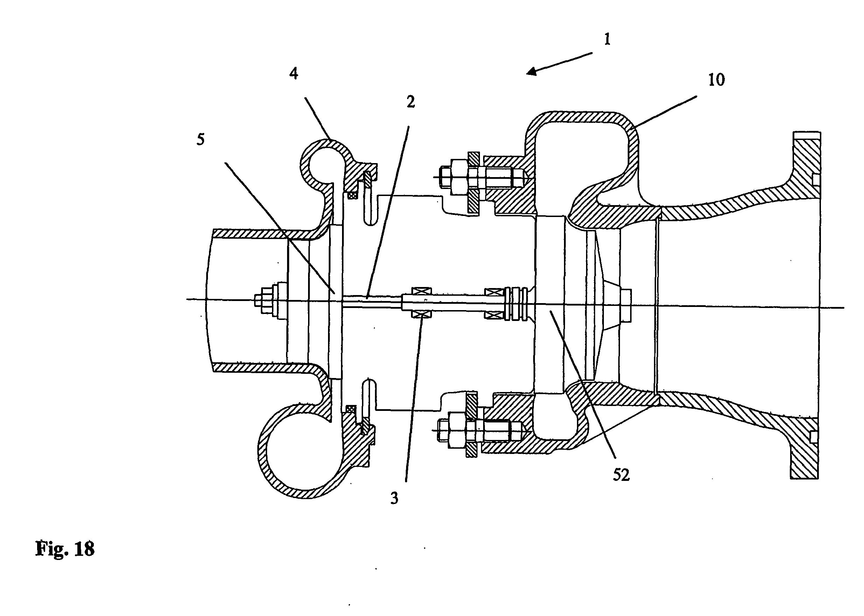

Fig. 18 zeigt einen derartigen Abgasturbolader in einer Schnittdarstellung, wobei jedoch die besondere Gestaltung der Turbine nicht dargestellt ist. Da bei dem erfindungsgemäßen Abgasturbolader der Aufbau der Turbine erfindungswesentlich ist, ist die folgende Beschreibung darauf beschränkt.

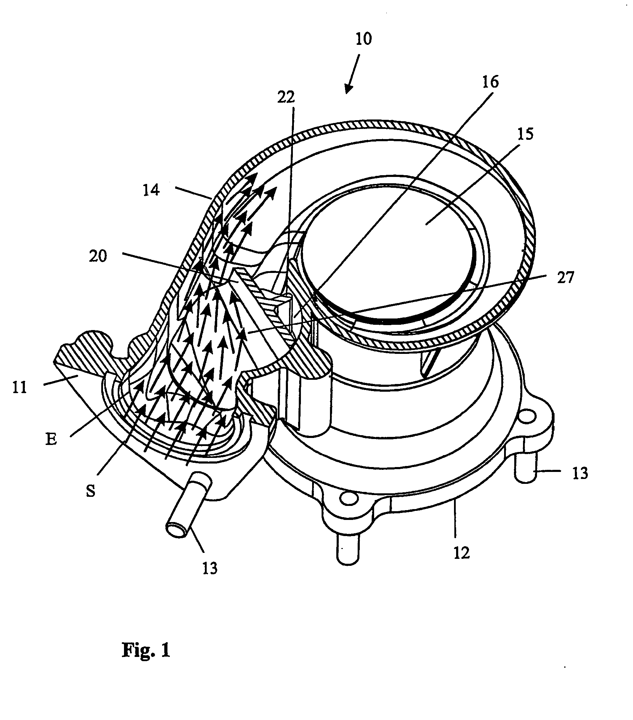

Fig. 1 zeigt in einer ISO-Darstellung ein derartiges Turbinengehäuse 10 im Schnitt. Die Turbine ist als Radialturbine in Form einer Schnecke ausgebildet. Dabei verjüngt sich der Querschnitt der Schnecke in Strömungsrichtung kontinuierlich. Im vorderen Bereich der Schnecke ist ein Walzendrehschieber 20 angeordnet, mit welchem der Querschnitt des Kanals kontinuierlich verändert werden kann. In der in Fig. 1 dargestellten Betriebsstellung des Walzendrehschiebers ist der Kanal zu etwa 2/3 abgedeckt, sodass das über die gesamte Einlassöffnung E einströmende Abgas durch den Walzendrehschieber innerhalb des abgedeckten Kanalquerschnittes in Richtung zur radial außen liegenden Gehäusewand 14 des Turbinengehäuses 10 geleitet wird. Da sich durch die dargestellte Betriebsstellung des Schiebers der Kanalquerschnitt am Ort des Schiebers verjüngt, erhöht sich die Strömungsgeschwindigkeit des Abgases. Es hat sich herausgestellt, dass die erhöhte Strömungsgeschwindigkeit im Wesentlichen innerhalb der gesamten Schnecke aufrecht erhalten bleibt, bis das Abgas letztlich in den nicht dargestellten Turbinenrotor eintritt, welcher nach der Montage in der Turbinenrotoraufnahme 15 sitzt.

Wie in Figur 1 zu erkennen, ist der Walzendrehschieber im Abgasdurchlassbereich der Schnecke so angeordnet, dass dessen Achse zum Querschnittsflächenschwerpunkt des Kanals am Ort der Drehschieberachse verschoben ist, der Schieber ist relativ zum Kanal deaxiert. Dies führt dazu, dass sich der Schieber radial innen zur Schnecke über den Kanal hinaus in das Turbinengehäuse 10 erstreckt, wodurch sich an der inneren Schneckenwand, welche sich radial innen zur Achse des Turbinengehäuses befindet, eine Gehäusetasche 16 ausbildet, um abschnittsweise den Schieber 20 aufzunehmen.

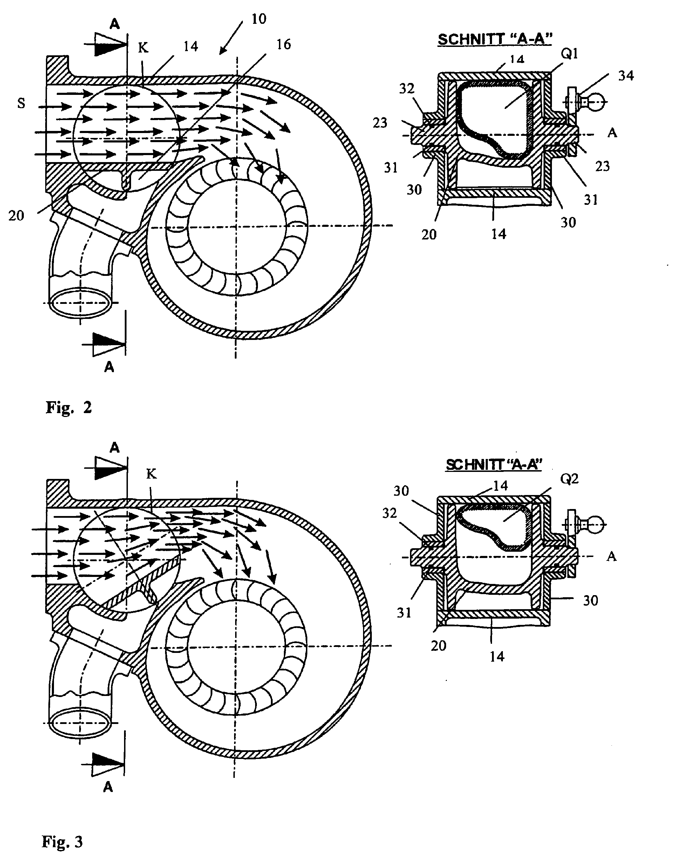

Das in Fig. 1 dargestellte Turbinengehäuse ist in einer reinen Schnittdarstellung in Fig. 2 gezeigt, wobei der Walzendrehschieber 20 in seiner Freigabe-Betriebsstellung steht, welche sich in den hier beschriebenen Ausführungsformen dadurch auszeichnet, dass im Bereich des Schiebers der Verlauf und die Gestaltung des Kanalquerschnitts nachgebildet sind, sodass die Strömung trotz des Schiebers ungehindert im Kanal geführt ist. Der in der Querschnittsdarstellung bezeichnete Kreis K stellt den Drehkreis K des Schiebers dar. Die Achse des Schiebers steht senkrecht zur Zeichnungsebene und verläuft durch den Mittelpunkt des angegebenen Kreises. Wie in der Darstellung von Fig. 2 zu erkennen, strömt das Abgas über den gesamten Kanalquerschnitt in die Schnecke ein und tritt im Verlauf des Durchlaufs der Schnecke in das Turbinenrad zum Antrieb der Turbine ein.

In der Schnittdarstellung A-A ist der Aufbau des Schiebers 20 sowie dessen Lagerung im Turbinengehäuse bzw. dessen Anordnung im Schneckenkanal dargestellt. Der Walzendrehschieber weist zur Befestigung im Turbinengehäuse integral hergestellte Lagerzapfen 23 auf, welche in einer Lagerbüchse 31 einer Lagerdeckel 30 gehalten sind. Die Lagerdeckel kann beispielsweise ein Sinterteil sein, welches sequentiell unter Verwendung zweier Werkstoffe hergestellt ist, beispielsweise ein erstes Metall zur Herstellung der eigentlichen Platte und ein zweites Metall zur Herstellung der Lagerbüchse 31. Besonders zweckmäßig ist es, wenn die Lagerdeckel 30 in eine entsprechende Öffnung im Turbinengehäuse eingesetzt und mit diesem am Bereich der Kontaktpunkte mit dem Gehäuse 10 verschweißt ist. Zur Abdichtung der im Schneckenkanal liegenden Bereiche des Walzendrehschiebers nach außen können die Lagerzapfen eine Nut aufweisen, in welche ein Kolbenring 32 eingebracht ist. An einem der nach außen geführten Lagerzapfen ist drehfest ein Hebel 34 angebracht, auf den ein nicht dargestelltes Verstellglied zum Drehen des Schiebers um seine Achse A angreift.

In der in Fig. 2 gezeigte Stellung des Schiebers ist der Kanal vollständig geöffnet (Freigabe-Betriebsstellung), sodass die vom Walzendrehschieber freigegebene Querschnittsfläche Q1 gerade dem Kanalquerschnitt entspricht. Wie zu erkennen, ist die in Bezug auf die Längsachse des Walzendrehschiebers gestaltete Queröffnung im Schieber derartig, dass der Mantel des Walzendrehschiebers über einen vorgegebenen Umfangsabschnitt durchbrochen ist.

Fig. 3 zeigt die in Fig. 2 dargestellte Ausführungsform, wobei der Schieber 20 leicht aus seiner Freigabe-Betriebsstellung herausgedreht ist, sodass ein Teil des Kanalquerschnitts durch den Schieber blockiert ist. Die freigegebene Querschnittsfläche Q2 ist kleiner als der Kanalquerschnitt Q1. Durch die Verminderung des Querschnitts erhöht sich die Geschwindigkeit der Abgasströmung in Stromrichtung hinter dem Drehschieber 20.

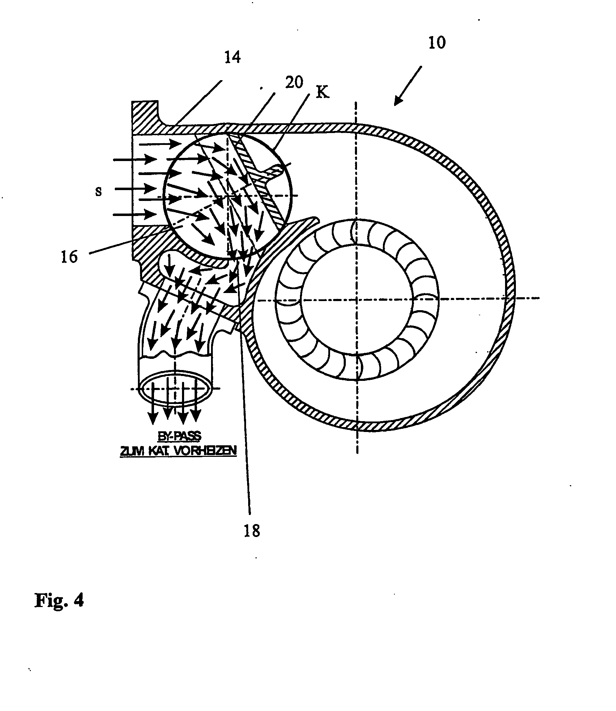

Fig. 4 zeigt das in Fig. 2 dargestellte Turbinengehäuse, wobei jedoch der Schieber eine Betriebsstellung aufweist, bei welcher er den Abgasstrom im Abgasdurchlassbereich der Turbine blockiert und in eine in der Gehäusetasche 16 angeordnete Öffnung 18 leitet, über welche das Abgas das Turbinengehäuse 10 verlässt. Eine derartige Bypass-Steuerung des Abgasstromes kann insbesondere beim Starten des Motors genutzt werden, um zuerst den Katalysator auf Betriebstemperatur zu bringen.

Bei der in den Figuren 2 bis 4 beschriebenen Ausgestaltung eines Turboladers kann der Schieber 20 kontinuierlich zum Verändern des Kanalquerschnitts verdreht werden, sodass je nach Bedarf die Strömungsgeschwindigkeit des in die Turbine einströmenden Abgases verändert werden kann.

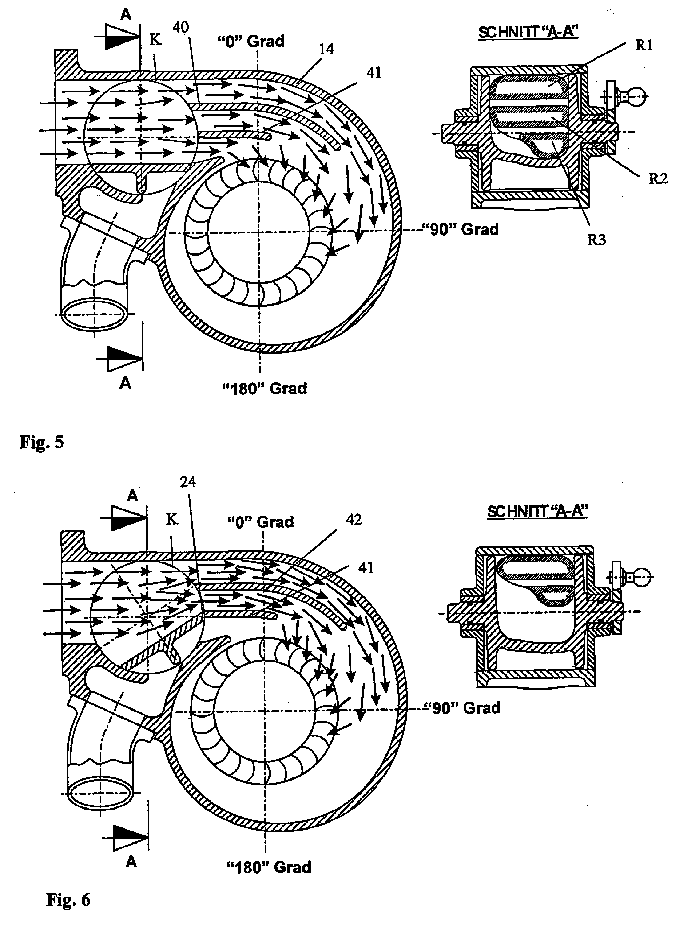

Die Figuren 5 - 7 zeigen eine weitere Ausgestaltung eines Abgasturboladers mit variabler Turbinengeometrie. Im Unterschied zu der vorhergehenden Ausführungsform sind hier zwei integral mit dem Turbinengehäuse gestaltete, als Leitrippen wirkende Zwischenwände 40, 41 vorgesehen, die den Kanal in radialer Richtung zur Achse der Turbine unterteilen, sodass bei geöffnetem Schieber zumindest abschnittsweise in Stromrichtung drei Schneckenkanäle innerhalb des Abgasdurchlassbereichs gebildet sind. Die Zwischenwände 40, 41 erstrecken sind jeweils über einen vorgegebenen Umfangsabschnitt der Schnecke radial beabstandet und parallel zur Innenfläche der radial außen liegenden Gehäusewand 14. Der Schieber ist identisch zu dem in den vorhergehenden Ausführungsformen des Abgasturboladers, sodass darauf im Einzelnen nicht mehr eingegangen werden muss. Die Leitrippen bzw. Zwischenwände 40, 41 dienen insbesondere dazu, die durch den Schieber 20 hergestellte Strömung über einen möglichst großen Umfangsbereich aufrechtzuerhalten. Wie in der Schnittdarstellung A-A von Fig. 5 zu erkennen, sind alle drei Schneckenkanäle vollständig geöffnet, sodass der Walzendrehschieber drei getrennte Querschnittsflächen R1, R2 und R3 freigibt. Je nach spezifischer Gestaltung erstreckt sich die innere Leitrippe 41 umfänglich zumindest bis zu dem Ort, welcher mit der Gerade "0 Grad" gekennzeichnet ist, sie kann sich jedoch auch umfänglich 90° weiter erstrecken, d.h. bis zu dem Umfangsort, welcher durch die Linie "90 Grad" gekennzeichnet ist. Dagegen kann sich die äußere Leitrippe umfänglich um weitere 90° erstrecken bis zu dem Umfangsort, welcher mit der Geraden "180 Grad" gekennzeichnet ist.

Fig. 6 zeigt die in Figur 5 dargestellte Ausführungsform, wobei der Schieber den innersten Schneckenkanal abgedeckt hat. Hierzu wirkt eine Dichtfläche an der Steuerkante 24 des Walzendrehschiebers 20 mit der Stirnfläche der Zwischenwand 41 zum Abschließen des inneren Schneckengangs. Um zu erreichen, dass die Steuerkante 24 auch mit der Stirnfläche der Leitrippe 42 so zusammenwirkt, dass im Wesentlichen die gesamte Strömung dann in den äußeren Schneckenkanal mit entsprechend hoher Strömungsgeschwindigkeit geleitet wird, liegen die Stirnflächen der Leitrippen 41, 42 auf dem in Fig. 6 dargestellten Drehkreis K, welcher durch die Steuerkante 24 beschrieben wird. In der Schnittdarstellung A-A von Fig. 6 ist die Freigabe des äußeren Schneckengangs sowie die teilweise Freigabe des mittleren Schneckengangs zu erkennen.

Allgemein ist festzustellen, dass die Gestaltung der Queröffnung des Walzendrehschiebers auf das jeweilige Problem beliebig angepasst werden kann.

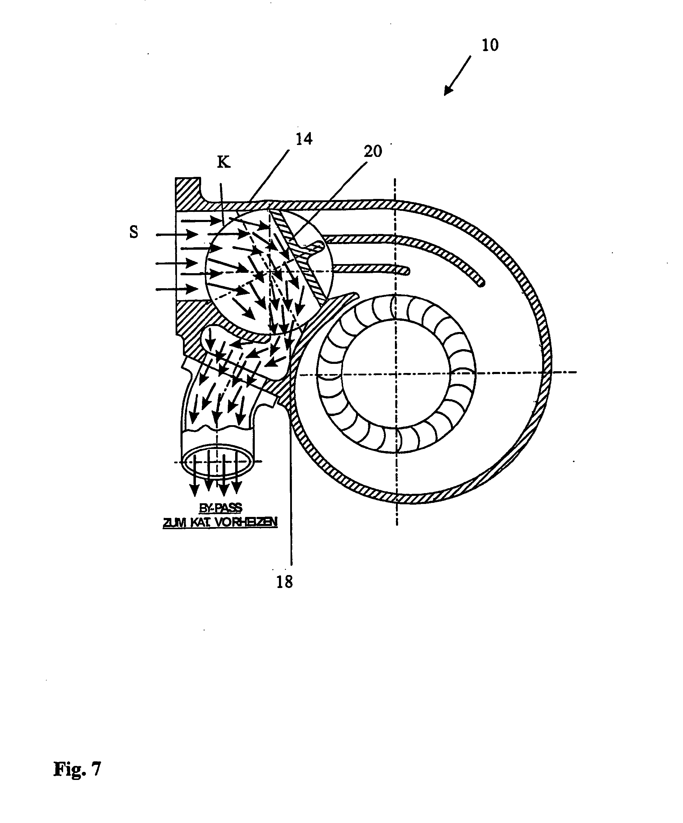

Fig. 7 zeigt das mit Leitrippen ausgestattete Turbinengehäuse gemäß Fig. 5, wobei der Schieber seine Bypass-Betriebsstellung besitzt, in welcher das Abgas zur Öffnung 18 geführt wird, sodass das Abgas nicht zum Turbinenrotor gelangt.

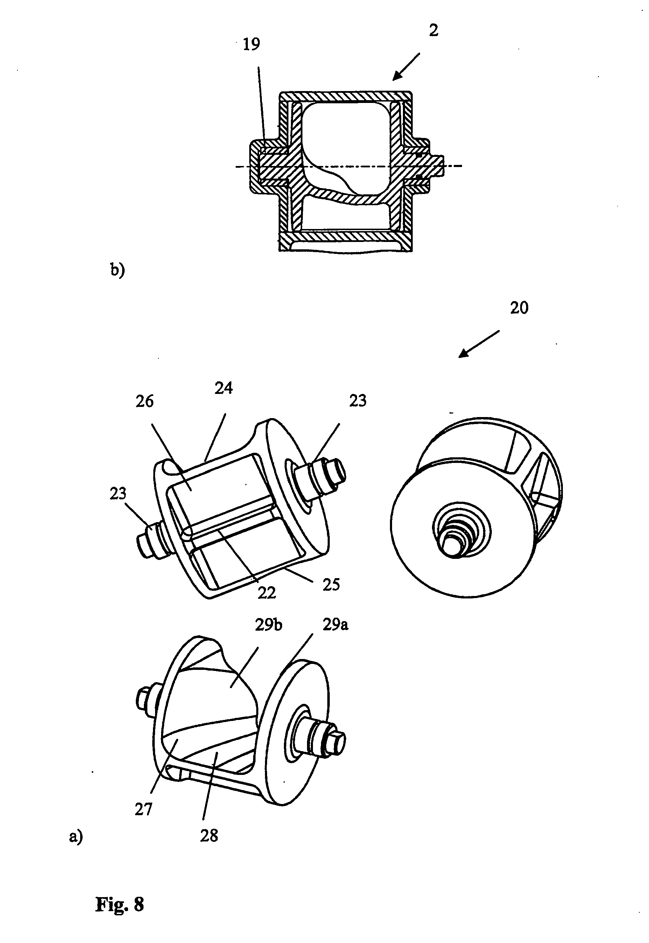

Fig. 8 zeigt eine Gestaltung des Walzendrehschiebers 20, wie er in einem Abgasturbolader im Abgasdurchlassbereich der Turbine verwendet werden kann. Fig. 8a zeigt drei ISO-Ansichten, Fig. 8b eine Schnittdarstellung, jedoch in einem Zustand, in welchem der Schieber in das Turbinengehäuse eingeführt ist. Wie aus den ISO-Darstellungen erkennbar, weist der Walzendrehschieber 20 quer zur Längsachse eine Queröffnung auf, welche eine Stromleitfläche 27 festlegt. Diese setzt sich bei dem in Fig. 8 dargestellten Walzendrehschieber aus einem Bodenabschnitt 28 und zwei Seitenabschnitten 29a, b zusammen. Auf der Rückseite des Bodenabschnitts sind Taschen 26 vorgesehen, um ein Verklemmen des Schiebers zu vermeiden. Dort ist ferner eine Verstärkungsrippe 22 vorgesehen. Die Mantelfläche des Walzendrehschiebers 20 ist auf der umfänglich gegenüberliegenden Seite des Bodenabschnitts 28 offen.

Fig. 8b stellt den in das Turbinengehäuse eingebauten Walzendrehschieber 20 dar, welcher hier jedoch mit einem Lagerzapfen nicht über die Turbinengehäusewand 14 herausragt, sondern in einem vom Turbinengehäuse gestalteten Sackloch 19 gelagert ist. Auf diese Weise kann eine Abdichtung des betreffenden Lagerzapfens entfallen.

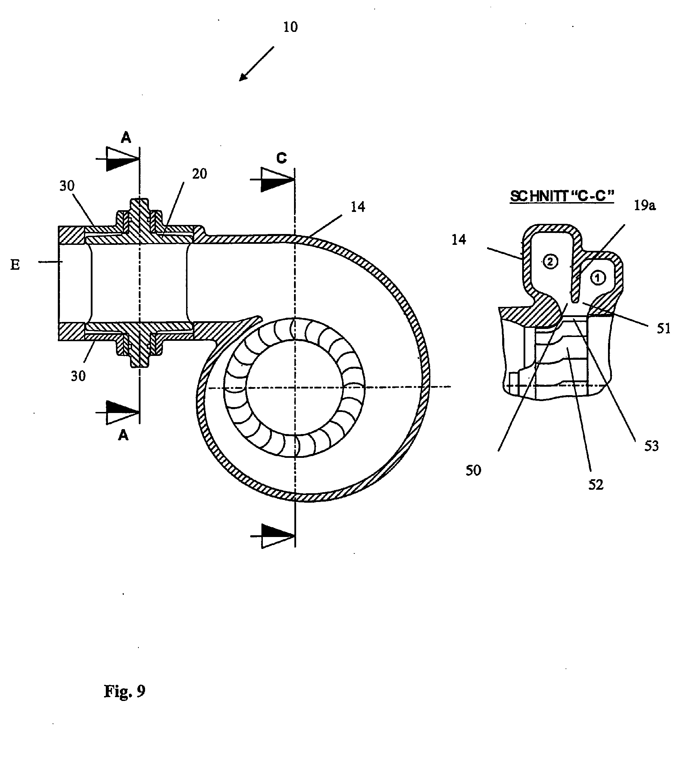

Fig. 9 zeigt im Schnitt das Turbinengehäuse 10 einer Ausführungsform eines erfindungsgemäßen Abgasturboladers. Wie aus der Schnittdarstellung C-C ersichtlich, ist der Abgasdurchlassbereich mehrflutig ausgebildet mit zwei Zuströmkanälen in Schneckenform, welche axial zueinander beabstandet und durch eine Wand 19a getrennt sind. Wie aus der Darstellung ersichtlich, ist der Walzendrehschieber bei der in Fig. 9 beschriebenen Ausführungsform im Vergleich zu den bislang beschriebenen um 90° verdreht, sodass die Längsachse des Schiebers senkrecht zur Turbinenachse liegt. In der der Schnittdarstellung C-C sind die Austrittsöffnungen 50, 51 der beiden Schnecken dargestellt, welche umfänglich den Radeintritt des Turbinenrades 52 umgeben und die axial voneinander beabstandet sind.

Es hat sich als zweckmäßig erwiesen, wenn die Summe der Querschnitte der Austrittsöffnungen (50, 51) der Schneckenkanäle etwa gleich, vorzugsweise genau gleich dem Eintrittsquerschnitt (53) des Turbinenrades. Dies gilt auch bei mehr als zwei Schneckenkanälen, welche axial hintereinander angeordnet sind.

Der Walzendrehschieber 20 ist im Turbinengehäuse 10 so angeordnet, dass er den Abgasstrom, welcher über die Einlassöffnung E in das Turbinengehäuse eintritt, in zwei Schneckenkanäle, in nur einen Schneckenkanal oder in einen Bypasskanal führt.

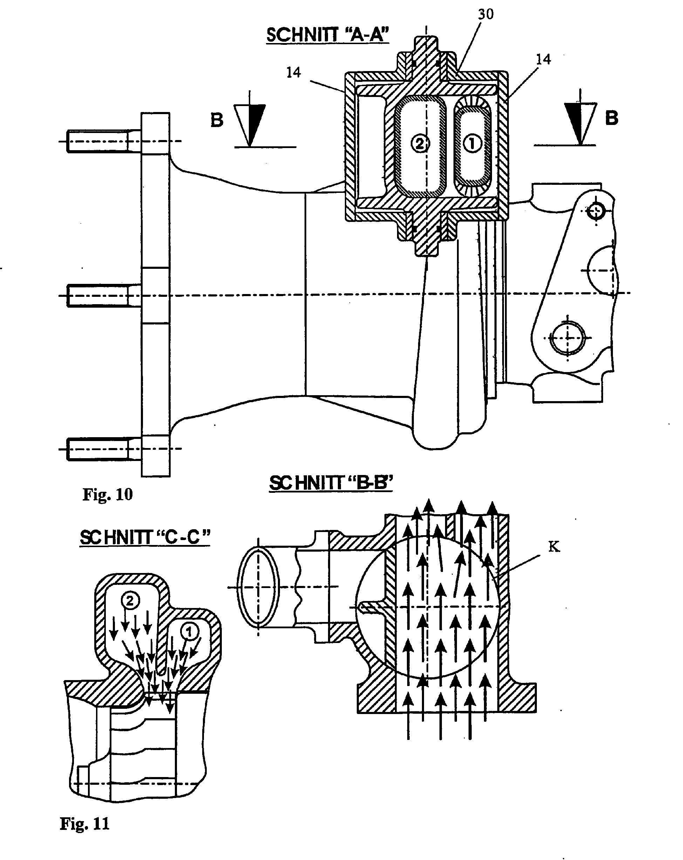

Fig. 10 zeigt das in Fig. 9 dargestellte Turbinengehäuse 10 entlang des Schnittes A-A. Wie zu erkennen, sind beide Schneckenkanäle offen, sodass der Abgasstrom ungehindert durch beide Kanäle fließen und im Bereich der Zuströmkanäle aus den Austrittsöffnungen 51, 50 in den Radeintritt des Turbinenrades 52 eintreten, siehe auch Fig. 11. Auch aus der Schnittdarstellung B-B geht hervor, dass der Schieber 20 in seiner Freigabe-Betriebsstellung steht, sodass der Abgasstrom ungehindert in beide Geraden einströmen kann.

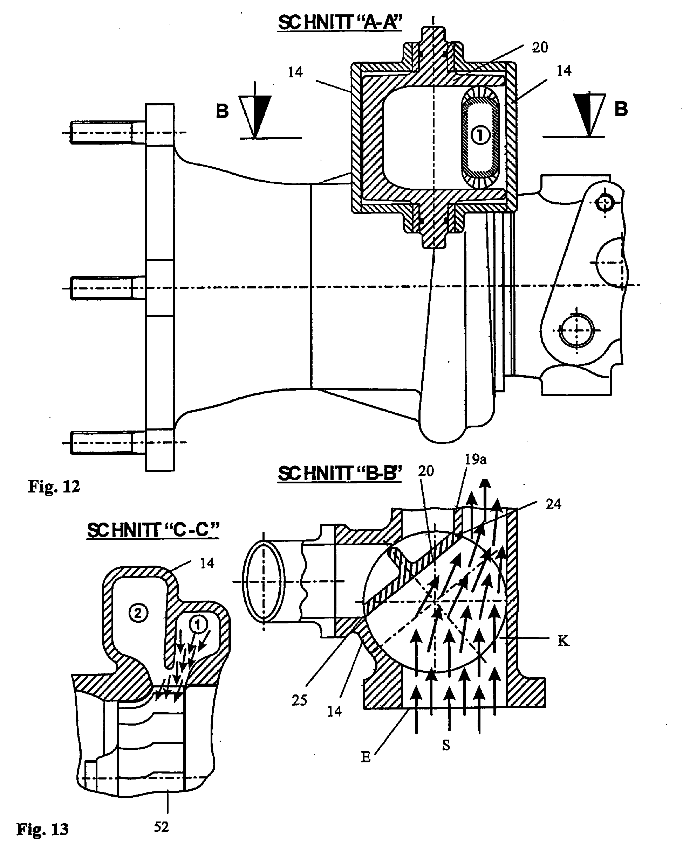

Fig. 12 zeigt wiederum einen Schnitt A-A des in Fig. 9 dargestellten Turbinengehäuses, wobei der Schieber zum Blockieren von des äußeren der beiden Schneckenkanäle eingestellt ist, siehe auch Fig. 13. Durch die Verengung des Gesamtkanalquerschnitts erhöht sich die Strömungsgeschwindigkeit des Abgases mit dem gewünschten Resultat, dass auch schon bei niedriger Motorenzahl ein entsprechender Ladedruck im Verdichter bereitgestellt werden kann. Die beiden Steuerkanten 24, 25 bewegen sich wiederum auf dem Drehkreis K und dichten in der Darstellung von Fig. 13 gegen das Gehäuse 14 bzw. eine Kanalwand 40 ab.

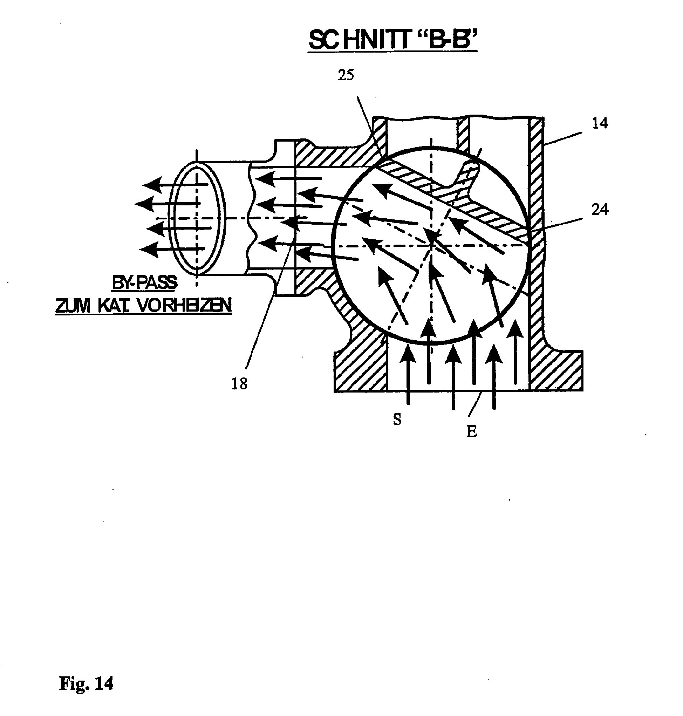

In der Schnittdarstellung B-B von Fig. 14, die sich auf das in Fig. 9 dargestellte Turbinengehäuse bezieht, ist der Schieber 20 gerade so eingestellt, dass die beiden Schneckenkanäle durch Zusammenwirken der Steuerkanten 24, 25 mit der Turbinengehäusewand 14 geschlossen sind und gleichzeitig die Öffnung 18 gegeben ist, damit das Abgas an der Turbine vorbei direkt in den Katalysator des Motors geleitet werden kann.

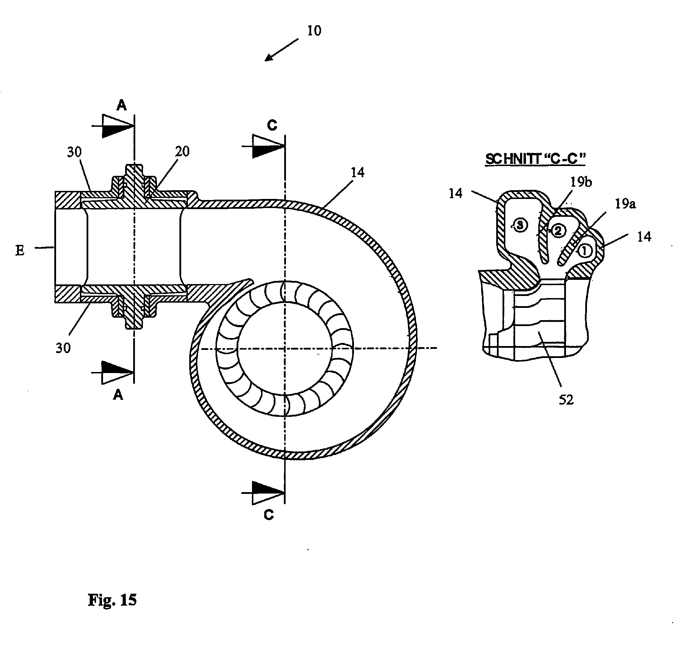

Fig. 15 zeigt eine weitere Ausführungsform, welche der in den Figuren 9 - 14 gezeigten entspricht mit der zusätzlichen Gestaltung eines weiteren, dritten Schneckenkanals, sodass nun durch den Walzendrehschieber 20 drei Zuströmkanäle geschaltet werden können, siehe die Schnittdarstellung C-C von Fig. 15.

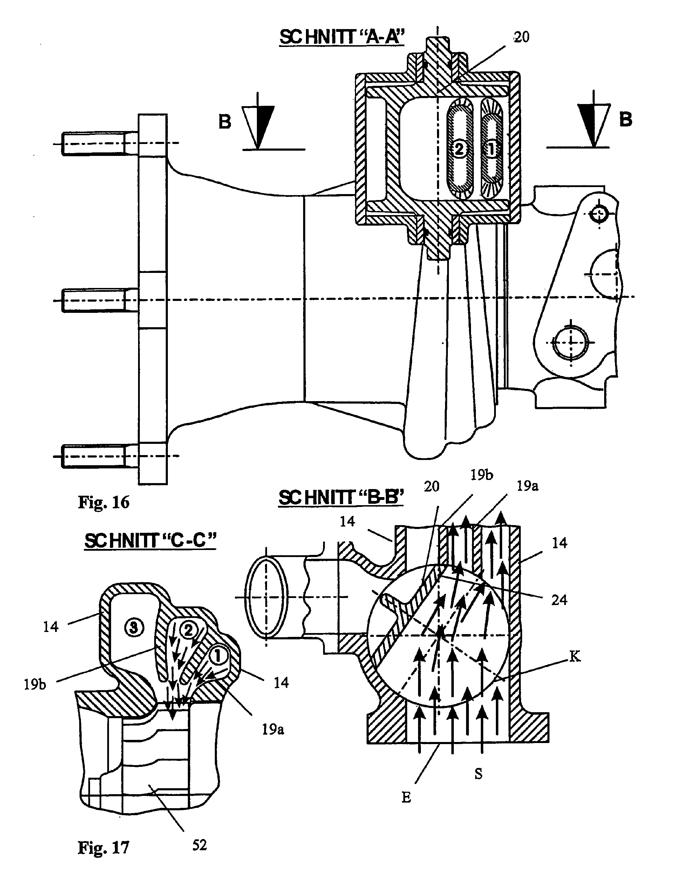

Die Figuren 16 und 17 zeigen das in Fig. 15 dargestellte Turbinengehäuse in Schnittdarstellungen A-A, B-B und C-C. Der Walzendrehschieber ist hier so eingestellt, dass dessen Steuerkante 24 mit der Trennwand 19b zusammenwirkt, um die Abgasströmung in die beiden äußeren Zuströmkanäle zu leiten.

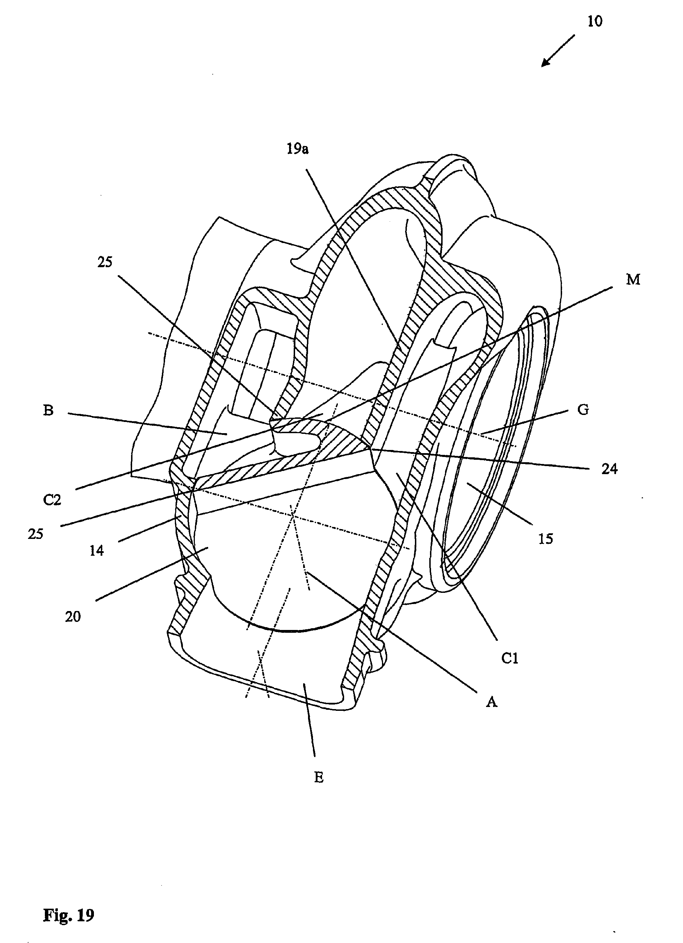

Fig. 19 zeigt eine weitere Ausführungsform eines erfindungsgemäßen Turbinengehäuses, das im Wesentlichen gleich zu dem in Fig. 9 dargestellten ausgebildet ist, der Walzendrehschieber 20 weist jedoch eine leicht unterschiedliche Gestaltung auf. Das Turbinengehäuse 10 umfasst wiederum einen zweiflutigen Abgasdurchlassbereich in Form von zwei schneckenförmigen, unterschiedliche Volumen aufweisende Zuströmkanälen auf, welche axial zueinander beabstandet und durch eine Wand 19a getrennt sind und die das Abgas einer gemeinsamen, in Fig. 19 nicht dargestellten Abgasturbine zuführen. Hierzu wird die Einlassöffnung E stromaufwärts hinter dem Walzendrehschieber 20 in zwei Kanäle aufgeteilt, wobei in der Figur 19 die Eintrittsöffnungen der beiden Kanäle (Schnecken) mit C1 bzw. C2 gekennzeichnet sind. Auch das in Fig. 19 dargestellte Turbinengehäuse 10 weist wiederum einen Bypass zur Aufheizung des Kats auf, die Eintrittsöffnung des Bypasskanals ist mit B bezeichnet. Wie aus der Figur ersichtlich, liegt die Drehachse A des Walzendrehschiebers 20 senkrecht zur Turbinenrotorachse G.

In der in Fig. 19 dargestellten Stellung des Walzendrehschiebers öffnet dieser den ersten Kanal (Eintrittsöffnung C1) vollständig, während er darüber hinaus den Abgaszustrom zum zweiten Kanal (Eintrittsöffnung C2) und den Bypasskanal (Eintrittsöffnung B) blockiert. Hierzu dienen wiederum Steuerkanten oder - flächen 24, 25 am Drehschieber 20, welche mit zugeordneten Wandabschnitten der Gehäusewand 14 bzw. der Kanaltrennwand 19a zusammenwirken. Zu dem oben beschriebenen Turbinengehäuse gemäß Fig. 13 unterscheidet sich die in Fig. 19 dargestellte Ausführungsform im Wesentlichen durch die Gestaltung des Walzendrehschiebers im Mantelbereich derartig, dass darüber hinaus der Bypasskanal und der zweite Kanal eingangsseitig gekoppelt sind. In der dargestellten Ausführungsform ist hierzu der Walzendrehschieber so ausgebildet, dass dieser die Eintrittsöffnung C2 des zweiten Kanals verschließt. Damit wird verhindert, dass Abgas, welches in den ersten Kanal einströmt, über den Rotor der Turbine in den zweiten Kanal eingeleitet wird und zurückströmt und letztlich über die Bypassöffnung B in den Bypasskanal einströmt.

Der Walzendrehschieber 20 weist ein nasenförmiges Mantelflächensegment M auf, das eine weitere Steuerkante 25a bereitstellt, die mit der Trennwand zwischen dem zweiten Kanal und dem Bypasskanal abdichtend zusammenwirkt.

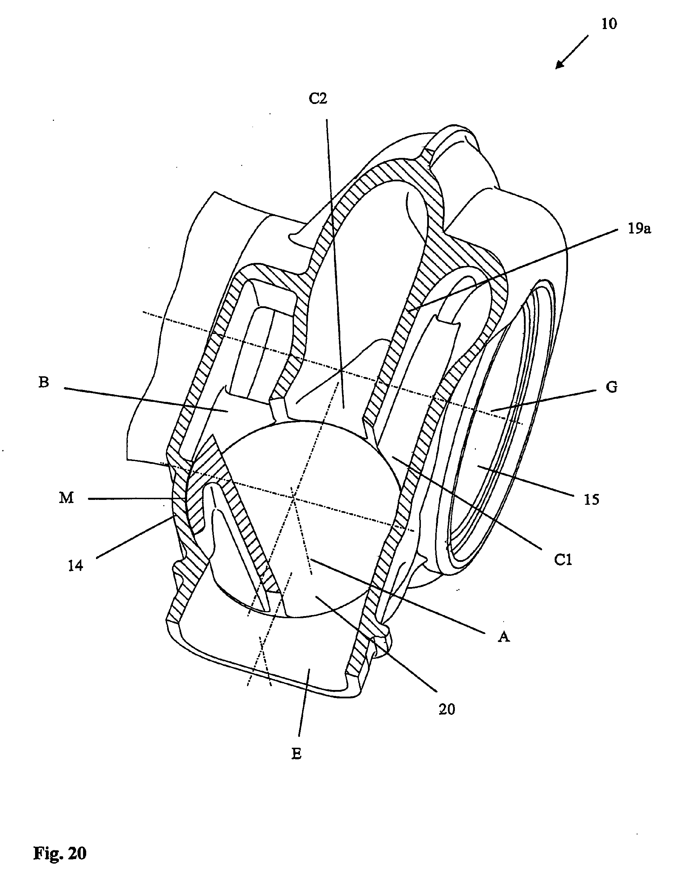

Fig. 20 zeigt das in Fig. 19 dargestellte Turbinengehäuse 10, wobei der Drehschieber 20 eine Stellung einnimmt, bei welcher beide Eintrittsöffnungen C1, C2 offen sind und darüber hinaus der Bypasskanal teilweise geöffnet ist. Die in Fig. 20 dargestellte Drehstellung bietet somit eine Waste-Gate-Funktion, ohne dass die sonst übliche Waste-Gate-Klappe vorgesehen werden muss.

Die in den Figuren 19, 20 dargestellte Ausführungsform eines Turbinengehäuses ermöglicht es damit, dass der Walzendrehschieber mit fortschreitender Drehung entgegen des Uhrzeigersinns sukzessiv, d.h. aufeinanderfolgend die Funktionsstellungen b) Öffnen eines ersten Zuströmkanals und Schließen des Bypasskanals sowie aller weiteren Zuströmkanäle (siehe Fig. 19), c) Öffnen zumindest zweier Zuströmkanäle und Verschließen des Bypasskanals und d) Öffnen von zumindest zwei Zuströmkanälen und Teilöffnen des Bypasskanals aufweist (siehe Fig. 20). Darüber hinaus kann der Drehschieber in eine der Stellung b) vorhergehende Stellung a) gebracht werden, bei welcher allein der Bypasskanal, insbesondere zum Heizen des Kats, geöffnet ist. Es versteht sich, dass auch Zwischenstellungen des Drehschiebers relativ zu den genannten Drehstellungen a) bis d) möglich sind.

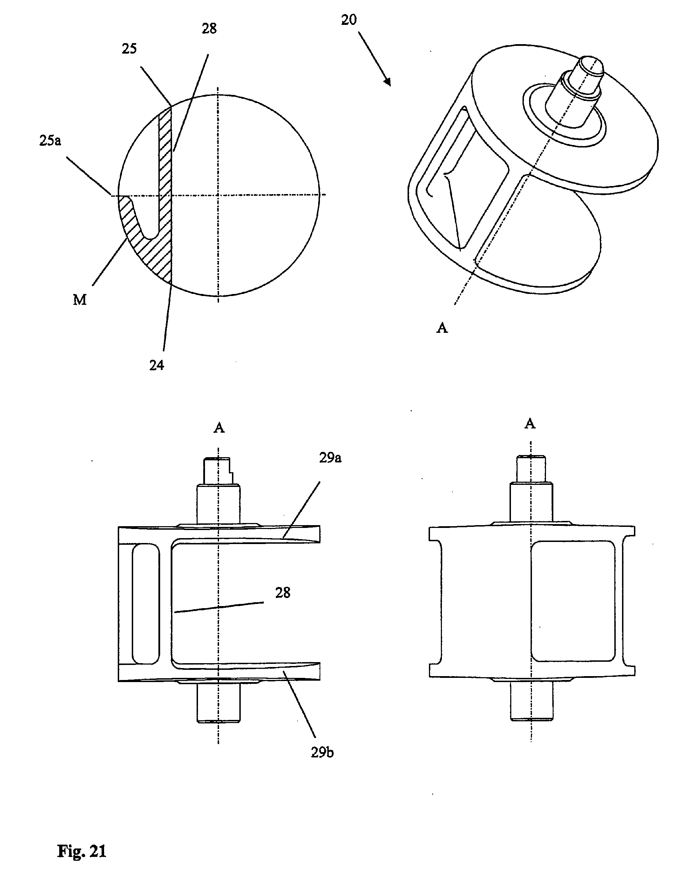

Fig. 21 zeigt den Drehschieber in verschiedenen Ansichten. Der Drehschieber ist im Hinblick auf seine Lagerung wie der in Fig. 8 dargestellte Drehschieber aufgebaut.

### Bezugszeichenliste

- 1: Abgasturbolader
- 2: Welle
- 3: Wellenlager
- 4: Verdichter
- 5: Verdichterrotor
- 10: Turbinengehäuse
- 11: Eingangsseitiger Anschlussflansch
- 12: Ausgangsseitiger Anschlussflansch
- 13: Bolzen
- 14: Gehäusewand
- 15: Turbinenrotoraufnahme
- 16: Gehäusetasche
- 17: Leitfläche
- 18: Öffnung
- 19 19a, 19b: Sackloch Trennwand
- 20: Walzendrehschieber
- 21: Walzendrehschieberrücken
- 22: Verstärkungsrippen
- 23: Lagerzapfen
- 24, 25: Steuerkante
- 26: Tasche
- 27: Leitfläche
- 28: Bodenabschnitt
- 29a,b: Seitenabschnitt
- 30: Lagerdeckel
- 31: Lagerbüchse
- 32: Kolbenring
- 33: Kontaktpunkt
- 34: Hebel
- 40: Zwischenwand
- 41: Zwischenwand
- 50,51: Austrittsöffnung
- 52: Turbinenrotor
- A: Achse des Walzendrehschiebers
- K: Drehkreis des Walzendrehschiebers
- Q1: Freigegebene Querschnittsfläche
- Q2: Freigegebene Querschnittsfläche
- R1,R2, R3: Freigegebene Querschnittsfläche
- S: Strömungsvektor
- E: Einlassöffnung

- G: Turbinenrotorachse
- 25a: Steuerkante
- M: Mantelflächensegment
- B: Eintrittsöffnung Bypass
- T1: Eintrittsöffnung Kanal 1
- C2: Eintrittsöffnung Kanal 2

## Patentansprüche

1. Abgasturbolader mit einer Turbine (10), die einen Turbinenrotor (52) aufweist, welcher über eine Welle einen Rotor eines Verdichters antreibt, und die Turbine ein Turbinengehäuse mit einer Abgaseinlassöffnung (E), einem Abgasdurchlassbereich und einer Abgasauslassöffnung umfasst, wobei ein Steuermittel vorgesehen ist zum Steuern des zu dem Turbinenrotor hinströmenden Abgases, wobei das Steuermittel einen im Turbinengehäuse gelagerten Walzendrehschieber (20) umfasst, welcher bezogen auf seine Längsachse (A) eine Queröffnung aufweist, die zur Längsachse außermittig angeordnet ist, wobei der Mantel des Walzendrehschiebers über einen Umfangsabschnitt durchbrochen ist, **dadurch gekennzeichnet, dass** die Längsachse des Walzendrehschiebers (20) senkrecht zur Achse des Turbinenrotors (G) verläuft und der Abgasdurchlassbereich mehrflutig ausgebildet ist mit wenigstens zwei Zuströmkanälen in Schneckenform, welche axial zueinander beabstandet und durch zumindest eine Wand (19a, 19b) getrennt sind, und wobei das Turbinengehäuse eine Bypassöffnung (18) aufweist, welche vom Walzendrehschieber (20) bei vorgegebener Walzendrehschieberstellung freigegeben ist, wobei der Walzendrehschieber den Abgasdurchlassbereich stromabwärtig blockiert.

2. Abgasturbolader nach Anspruch 1, **dadurch gekennzeichnet, dass** der Walzendrehschieber (20) in einem als Kanal ausgebildeten Abschnitt des Abgasdurchlassbereich derart angeordnet ist, dass in einer vorgegebenen Betriebsstellung des Walzendrehschiebers der Kanal vollständig freigegeben ist.

3. Abgasturbolader nach Anspruch 2, **dadurch gekennzeichnet, dass** der Walzendrehschieber in seiner Betriebsstellungzur vollständigen Freigabe des Kanals in einem Umfangsabschnitt radial aus dem Kanal heraus in eine Tasche (16) des Turbinengehäuses hineinragt, wobei dieser Umfangsabschnitt dem offenen Umfangsabschnitt des Walzendrehschiebers radial gegenüberliegt.

4. Abgasturbolader nach Anspruch 2, **dadurch gekennzeichnet, dass** in der Freigabe-Betriebsstellung des Walzendrehschieber (20) der Kanalverlauf des Abgasdurchlasses im Bereich des offenen Umfangsabschnitts des Walzendrehschiebers eben ist.

5. Abgasturbolader nach einem der Ansprüche 1 bis 4, **dadurch gekennzeichnet, dass** der Walzendrehschieber (20) in seiner Mantelfläche taschenförmige Vertiefungen (26) aufweist.

6. Abgasturbolader nach einem der Ansprüche 1 bis 5, **dadurch gekennzeichnet, dass** der Walzendrehschieber in seiner Mantelfläche zumindest eine Rippe (22) aufweist.

7. Abgasturbolader nach einem der Ansprüche 1 bis 6, **dadurch gekennzeichnet, dass** der Walzendrehschieber (20) an beiden Längsenden jeweils einen Lagerzapfen (23) aufweist, wobei zumindest ein Lagerzapfen in einem Lagerdeckel (30) gehalten ist, der in einer Öffnung des Turbinengehäuses sitzt und mit diesem verbunden, insbesondere verschweißt ist.

8. Abgasturbolader nach Anspruch 7, **dadurch gekennzeichnet, dass** der Lagerzapfen (23) eine Nut zur Aufnahme eines Kolbenrings (32) aufweist.

9. Abgasturbolader nach einem der Ansprüche 7 oder 8, **dadurch gekennzeichnet, dass** das Turbinengehäuse (10) auf der Innenseite der Außenwandung (14) ein Sackloch (19) zur Aufnahme eines Lagerzapfens des Walzendrehschiebers aufweist.

10. Abgasturbolader nach einem der Ansprüche 7 bis 9, **dadurch gekennzeichnet, dass** ein Lagerzapfen (23) in Wirkverbindung mit einer Verstelleinrichtung zur Drehung des Walzendrehschiebers um dessen Längsachse (A) steht.

11. Abgasturbolader nach einem der Ansprüche 1 bis 10, **dadurch gekennzeichnet, dass** der Walzendrehschieber (20) im Abgasdurchlassbereich angeordnet ist.

12. Abgasturbolader nach einem der Ansprüche 1 bis 11, **dadurch gekennzeichnet, dass** die Austrittsöffnungen (50, 51) der Zuströmkanäle den Radeintritt des Turbinenrotors (52) umgeben und axial voneinander beabstandet sind.

13. Abgasturbolader nach einem der Ansprüche 1 bis 12, **dadurch gekennzeichnet, dass** eine Dichtfläche an einer Steuerkante (24) des Walzendrehschiebers (20) in einer vorgegebenen Betriebsstellung des Walzendrehschiebers mit einer Stirnfläche einer Zwischenwand (19a, 19b) zum Verschließen eines Zuströmkanals zusammenwirkt.

14. Abgasturbolader nach einem der Ansprüche 1 bis 13, **dadurch gekennzeichnet**, **das** eine Steuerkante (24) des Walzendrehschiebers schräg zu dessen Achse (A) verläuft.

15. Abgasturbolader nach einem der Ansprüche 1 bis 14, **dadurch gekennzeichnet, dass** der der im Turbinengehäuse gelagerte Walzendrehschieber mit fortschreitender Drehung in eine vorgegebene Drehrichtung sukzessiv einen Bypasskanal öffnet undalle Zuströmkanäle verschließt; b) einen ersten Zuströmkanals öffnet und den Bypasskanals und aller weiteren Zuströmkanäle verschließt; c) zumindest zwei Zuströmkanälen öffnet und den Bypasskanal verschließt; und d) zumindest zwei Zuströmkanäle öffnet und den Bypasskanal teilöffnet.

16. Abgasturbolader nach einem der Ansprüche 1 bis 15, **dadurch gekennzeichnet, dass** der Walzendrehschieber (20) eine Mantelflächengestaltung aufweist zum Verhindern der Rückspülung von Abgas aus dem ersten Zuströmkanal, über die Turbine in den Bypasskanal, wenn der Walzendrehschieber eine Drehstellung einnimmt, bei welcher ein erster Zuströmkanal geöffnet und der Bypasskanal sowie alle weiteren Zuströmkanäle geschlossen sind.

## Claims

1. Exhaust turbocharger with a turbine (10) that includes a turbine rotor (52) which drives a rotor of a compressor through a shaft, the turbine including a turbine shell with an exhaust gas inlet opening (E), an exhaust gas passage section and an exhaust gas outlet opening, wherein a control means is provided for controlling the exhaust gas flowing towards the turbine rotor, wherein the control means comprises a roll-type rotary slide valve (20), which has a transverse opening with respect to its longitudinal axis (A) which is eccentrically arranged with respect to the longitudinal axis, the lateral surface of the roll-type rotary slide valve being cut through along a circumferential section, **characterized in that** the longitudinal axis of the roll-type rotary slide valve (20) extends vertically to the axis of the turbine rotor (G) and that the exhaust gas passage section is designed in a multi-channel fashion with at least two inflow channels in a spiral shape which are axially spaced from each other and are separated by at least one wall (19a, 19b), and wherein the turbine shell includes a bypass opening (18) which is exposed by the roll-type rotary slide valve (20) at a predetermined position thereof, wherein the roll-type rotary slide valve (20) blocks the exhaust gas passage section in a downstream position.

2. Exhaust turbocharger according to claim 1, **characterized in that** the roll-type rotary slide valve (20) is arranged in a part of the exhaust gas passage section, which is designed as a channel, in such a manner that the channel is fully exposed in a predetermined operating position of the roll-type rotary slide valve.

3. Exhaust turbocharger according to claim 2, **characterized in that** the roll-type rotary slide valve in its operating position intended for the full exposure of the channel radially projects from the channel into a pocket (16) of the turbine shell in a circumferential section, wherein this circumferential section radially faces the open circumferential section of the roll-type rotary slide valve.

4. Exhaust turbocharger according to claim 2, **characterized in that** in the exposure operating position of the roll-type rotary slide valve (20) the run of the channel of the exhaust gas passage is plane in the region of the open circumferential section of the roll-type rotary slide valve.

5. Exhaust turbocharger according to one of the claims 1 to 4, **characterized in that** the roll-type rotary slide valve (20) includes pocket-like recesses (26) in the lateral surface thereof.

6. Exhaust turbocharger according to one of the claims 1 to 5, **characterized in that** the roll-type rotary slide valve includes at least one rib (22) in its lateral surface.

7. Exhaust turbocharger according to one of the claims 1 to 6, **characterized in that** the roll-type rotary slide valve (20) respectively includes a bearing pin (23) on both longitudinal ends, wherein at least one bearing pin is supported in a bearing cover (30), which is seated in the opening of the turbine shell and is connected thereto, particularly by welding.

8. Exhaust turbocharger according to claim 7, **characterized in that** the bearing pin (23) includes a groove for receiving a piston ring (32).

9. Exhaust turbocharger according to one of the claims 7 or 8, **characterized in that** the turbine shell (7) includes on the inside of the outer wall (14) a blind hole (19) for receiving a bearing pin of the roll-type rotary slide valve.

10. Exhaust turbocharger according to one of the claims 7 to 9, **characterized in that** a bearing pin (23) is operatively connected to an adjustment device for rotating the roll-type rotary slide valve about its longitudinal axis (A).

11. Exhaust turbocharger according to one of the claims 1 to 10, **characterized in that** the roll-type rotary slide valve (20) is disposed in the exhaust gas passage section.

12. Exhaust turbocharger according to one of the claims 1 to 11, **characterized in that** the outlet openings (50, 51) of the inflow channels surround the wheel entry of the turbine rotor (52) and are axially spaced from each other.

13. Exhaust turbocharger according to one of the claims 1 to 12, **characterized in that** a sealing surface on a control edge (24) of the roll-type rotary slide valve (20) cooperates with a front face of an intermediate wall (19a, 19b) for closing an inflow channel in a predetermined operating position of the roll-type rotary slide valve.

14. Exhaust turbocharger according to one of the claims 1 to 13, **characterized in that** a control edge (24) of the roll-type rotary slide valve extends in an inclined fashion with respect to the axis (A) thereof.

15. Exhaust turbocharger according to one of the claims 1 to 14, **characterized in that** the roll-type rotary slide valve supported within the turbine shell successively opens a bypass channel and closes all the inflow channels with a continued rotation in a predetermined rotating direction; b) opens a first inflow channel and closes the bypass channel and all the other inflow channels; c) opens at least two inflow channels and closes the bypass channel; and d) opens at least two inflow channels and partially closes the bypass channel.

16. Exhaust turbocharger according to one of the claims 1 to 15, **characterized in that** the roll-type rotary slide valve (20) has the lateral surface designed for preventing backflow of exhaust gas from the first inflow channel via the turbine to the bypass channel if the roll-type rotary slide valve assumes a position in which a first inflow channel is open and the bypass channel as well as all the other inflow channels are closed.

## Revendications

1. Turbocompresseur d'échappement avec une turbine (10) comportant un rotor de turbine (52) faisant tourner un rotor d'un compresseur par un arbre, et la turbine comportant une boîte de turbine avec un orifice d'admission des gaz d'échappement (E), une zone passante des gaz d'échappement et un orifice de sortie des gaz d'échappement, un moyen de commande destiné à commander le gaz d'échappement coulant vers le rotor de turbine étant prévu comprenant une vanne rotative à cylindre (20) logée dans la boîte de turbine, ladite vanne rotative à cylindre ayant un orifice transversale par rapport à son axe longitudinal (A) et disposé de manière excentrique par rapport à l'axe longitudinal, tandis que la surface latérale de la vanne rotative à cylindre est cassée sur une section circonférentielle, **caractérisé en ce que** l'axe longitudinal de la vanne rotative à cylindre (20) s'étend verticalement par rapport à l'axe du rotor de turbine (G) et la zone passante des gaz d'échappement est formée de façon multi-canaux avec au moins deux canaux d'afflux en forme de volute qui sont axialement écartés l'un part rapport à l'autre et séparés par au moins une cloison (19a, 19b), et la boîte de turbine comportant un orifice de dérivation (18) qui est libéré de la vanne rotative à cylindre (20) à une position prédéterminée de la vanne rotative à cylindre, tandis que la zone passante des gaz d'échappement est bloquée de la vanne rotative à cylindre dans la direction aval.

2. Turbocompresseur d'échappement selon la revendication 1, **caractérisé en ce que** la vanne rotative à cylindre (20) est disposée dans une partie de la zone passante des gaz d'échappement formée comme un canal de telle façon que le canal est complètement libéré de la vanne rotative à cylindre dans une position de fonctionnement prédéterminée de la vanne rotative à cylindre.

3. Turbocompresseur d'échappement selon la revendication 2, **caractérisé en ce que** la vanne rotative à cylindre, dans sa position de fonctionnement destinée à la libération complète du canal, radialement dépasse du canal dans une section circonférentielle et avance dans une poche (16) de la boîte de turbine, cette section circonférentielle étant située radialement vis à vis la section circonférentielle ouverte de la vanne rotative à cylindre.

4. Turbocompresseur d'échappement selon la revendication 2, **caractérisé en ce que** le parcours du canal de la zone passante des gaz d'échappement est plan dans la région de la section circonférentielle ouverte de la vanne rotative à cylindre lorsque la vanne rotative à cylindre se trouve dans sa position de fonctionnement débloquant.

5. Turbocompresseur d'échappement selon l'une des revendications 1 à 4, **caractérisé en ce que** la vanne rotative à cylindre (20) comporte des cavités en forme de poche (26) dans sa surface latérale.

6. Turbocompresseur d'échappement selon l'une des revendications 1 à 5, **caractérisé en ce que** la vanne rotative à cylindre comporte au moins une nervure (22) dans sa surface latérale.

7. Turbocompresseur d'échappement selon l'une des revendications 1 à 6, **caractérisé en ce que** la vanne rotative à cylindre comporte un tourillon (23) à chacune de ses extrémités longitudinales, au moins un tourillon étant retenu dans un couvercle de logement (30) disposé dans un orifice de la boîte de turbine et connecté avec la boîte de turbine, en particulier par soudage.

8. Turbocompresseur d'échappement selon l'une des revendications 1 à 7, **caractérisé en ce que** le tourillon (23) comporte une rainure destinée à recevoir un segment de piston (32).

9. Turbocompresseur d'échappement selon l'une des revendications 7 ou 8, **caractérisé en ce que** la boîte de turbine (10) comporte sur la face intérieure de la paroi extérieure (14) un trou borgne (19) destiné à recevoir un tourillon de la vanne rotative à cylindre.

10. Turbocompresseur d'échappement selon l'une des revendications 7 à 9, **caractérisé en ce qu'**un tourillon (23) est connecté en fonction avec un dispositif de réglage pour la rotation de la vanne rotative à cylindre autour son axe longitudinal (A).

11. Turbocompresseur d'échappement selon l'une des revendications 1 à 10, **caractérisé en ce que** la vanne rotative à cylindre (20) est disposée dans la zone passante des gaz d'échappement.

12. Turbocompresseur d'échappement selon l'une des revendications 1 à 11, **caractérisé en ce que** les orifices de sortie (50, 51) des canaux d'afflux entourent l'entrée de la roue du rotor de turbine (52) est sont axialement écartés l'un de l'autre.

13. Turbocompresseur d'échappement selon l'une des revendications 1 à 12, **caractérisé en ce qu'**une surface d'étanchéité sur une rampe de commande (24) de la vanne rotative à cylindre (20) coopère, dans une position de fonctionnement prédéterminée de la vanne rotative à cylindre, avec une face d'une cloison (19a, 19b) pour fermer un canal d'afflux.

14. Turbocompresseur d'échappement selon l'une des revendications 1 à 13, **caractérisé en ce qu'**une rampe de commande (24) de la vanne rotative à cylindre s'étend de façon inclinée par rapport à son axe (A).

15. Turbocompresseur d'échappement selon l'une des revendications 1 à 14, **caractérisé en ce que** la vanne rotative à cylindre logée dans la boîte de turbine, au cours de sa rotation continue dans un sens de rotation prédéterminée, successivement ouvre un canal de dérivation et ferme toutes les canaux d'afflux ; b) ouvre un premier des canaux d'afflux et le canal de dérivation et ferme toutes les autres canaux d'afflux ; c) ouvre au moins deux canaux d'afflux et ferme le canal de dérivation ; et d) ouvre au moins deux canaux d'afflux et ouvre partiellement le canal de dérivation.

16. Turbocompresseur d'échappement selon l'une des revendications 1 à 15, **caractérisé en ce que** la vanne rotative à cylindre a une surface latérale qui est formée d'une façon à empêcher le rétrolavage des gaz d'échappement du premier canal d'afflux à travers du turbine et vers le canal de dérivation lorsque la vanne rotative à cylindre prend une position rotative dans laquelle un premier canal d'afflux est ouvert et le canal de dérivation ainsi que toutes les autres canaux d'afflux sont fermés.
